(19)

Europäisches
Patentamt

European
Patent Office

Office européen
des brevets

(11) **EP 4 691 874 A1**

(12) **EUROPEAN PATENT APPLICATION**
published in accordance with Art. 153(4) EPC

(43) Date of publication:
**11.02.2026 Bulletin 2026/07**

(21) Application number: **24795597.4**

(22) Date of filing: **05.03.2024**

(51) International Patent Classification (IPC):
**B60W 30/095** (2012.01)

(52) Cooperative Patent Classification (CPC):
Y02T 10/40

(86) International application number:
**PCT/CN2024/080114**

(87) International publication number:
**WO 2024/222210 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 CN 202310479827**

(71) Applicant: **Shenzhen Yinwang Intelligent
Technologies Co., Ltd.
Shenzhen, Guangdong 518110 (CN)**

(72) Inventors:
• **DUAN, Yongkang
  Shenzhen, Guangdong 518129 (CN)**

• **YANG, Yilun
  Shenzhen, Guangdong 518129 (CN)**
• **WANG, Weixin
  Shenzhen, Guangdong 518129 (CN)**
• **DAI, Zhengchen
  Shenzhen, Guangdong 518129 (CN)**
• **ZHAO, Bin
  Shenzhen, Guangdong 518129 (CN)**
• **WANG, Xiang
  Shenzhen, Guangdong 518129 (CN)**

(74) Representative: **Gill Jennings & Every LLP
The Broadgate Tower
20 Primrose Street
London EC2A 2ES (GB)**

(54) **METHOD AND APPARATUS FOR DETERMINING TARGET INTENTION**

(57)    A method and an apparatus for determining an intent of a target are provided. The method may be applied to the field of intelligent driving. The method includes: determining, based on a historical motion status of a target obstacle, a probability distribution of a motion status in which the target obstacle preempts to pass through an intersection point and a probability distribution of a motion status in which the target obstacle yields to pass through the intersection point; and determining, in advance based on a current motion status of the target obstacle, the probability distribution of the motion status in which the target obstacle preempts to pass through the intersection point, and the probability distribution of the motion status in which the target obstacle yields to pass through the intersection point, whether the target obstacle preempts or yields to pass through the intersection point. Embodiments of this application can be applied to an intelligent vehicle or an electric vehicle. Before the intelligent vehicle or the electric vehicle intersects with the target obstacle, an intent of preempting or yielding of the obstacle can be determined in advance, so that a correct decision and plan can be made in advance, thereby greatly improving safety of intelligent driving.

**400**

| Obtain a historical motion status of a first target | S410 |

| Determine, based on the historical motion status of the first target, a first probability distribution of a motion status in which the first target preempts to pass through an intersection point and a second probability distribution of a motion status in which the first target yields to pass through the intersection point | S420 |

| Determine, based on a current motion status of the first target, the first probability distribution, and the second probability distribution, whether the first target preempts or yields to pass through the intersection point | S430 |

FIG. 4

EP 4 691 874 A1

**Description**

This application claims priority to Chinese Patent Application No. 202310479827.4, filed with the China National Intellectual Property Administration on April 27, 2023 and entitled "METHOD AND APPARATUS FOR DETERMINING INTENT OF TARGET", which is incorporated herein by reference in its entirety.

**TECHNICAL FIELD**

Embodiments of this application relate to the field of intelligent driving, and more specifically, to a method and an apparatus for determining an intent of a target.

**BACKGROUND**

Rapid development of the automobile industry brings a plurality of assisted driving technologies and autonomous driving technologies, so that driving pressure can be relieved, and safety and convenience can be improved. In an autonomous driving system, modules such as a sensing module, a prediction module, a decision-making module, a planning module, a control module, and an executor perform their respective functions, so that a vehicle can appropriately respond to a surrounding obstacle, thereby ensuring safety at all times. From an end-to-end perspective, due to an error in detection and future behavior estimation of a moving obstacle in sensing and prediction, there is a delay in signal tracking in planning and control. Due to a plurality of factors such as a response delay of a vehicle chassis, when facing a scenario of interaction with various moving obstacles, the autonomous driving system needs to identify a movement trend and an intent of preempting or yielding of a target obstacle in advance, to make a correct decision and planning in advance.
In view of this, an intelligent driving solution in which an intent of preempting or yielding of a target obstacle can be identified in advance needs to be urgently developed.

**SUMMARY**

This application provides a method and an apparatus for determining an intent of a target. Based on a historical motion status of a target obstacle, before an intelligent driving device intersects with the target obstacle, an intent of preempting or yielding of the obstacle can be determined in advance, so that a correct decision and plan can be made in advance, thereby greatly improving safety of intelligent driving.
According to a first aspect, a method for determining an intent of a target is provided. The method may be performed by an intelligent driving device, or may be performed by a computing platform disposed in the intelligent driving device, or may be performed by a chip or a processing circuit in the computing platform. This is not limited in embodiments of this application.
The method includes: obtaining a historical motion status of a first target; determining, based on the historical motion status of the first target, a first probability distribution of a motion status in which the first target preempts to pass through an intersection point, and a second probability distribution of a motion status in which the first target yields to pass through the intersection point; and determining, based on a current motion status of the first target, the first probability distribution, and the second probability distribution, whether the first target preempts or yields to pass through the intersection point.
In this application, the probability distribution of the motion status in which the target obstacle preempts or yields to pass through the intersection point is determined based on the historical motion status of the target obstacle, to determine in advance, with reference to the current motion status of the obstacle, an intent of preempting or yielding of the obstacle when the obstacle is far away from the intersection point, so that a correct decision and planning can be made in advance based on the intent, thereby greatly improving safety and a human-like nature of intelligent driving.
For example, a probability distribution of a motion status in which the target obstacle preempts or yields to pass through the intersection point when running in the historical motion status may be determined by querying a table based on the historical motion status of the target obstacle, to determine in advance, with reference to the current motion status of the target obstacle, whether the target obstacle preempts or yields to pass through the intersection point. For example, for a sample intersection scenario and a historical motion status of a sample target obstacle, a probability distribution of a motion status in which the sample target obstacle preempts to pass through a sample intersection point and a probability distribution of a motion status in which the sample target obstacle yields to pass through the sample intersection point in the sample intersection scenario can be calibrated through a test. Therefore, an association relationship between the probability distribution of the motion status in which the sample target preempts to pass through, the probability distribution of the motion status in which the sample target yields to pass through, and the historical motion status of the sample target can be obtained.
With reference to the first aspect, in some implementations of the first aspect, the determining, based on the historical motion status of the first target, a first probability distribution of a motion status in which the first target preempts to pass through an intersection point, and a second probability distribution of a motion status in which the first target yields to pass through the intersection point may include: determining, based on the historical motion status of the first target, a first motion status limit value in a case in which the first target preempts to pass through the intersection point and a second motion status limit value in a case in which the first target yields to pass through the intersection point; and determining the first probability distribution based on the first motion status limit value, and determining the second probability distribution based on the second motion status limit value.

For example, the first motion status limit value may represent, based on the historical motion status of the first target, a condition that at least needs to be met by a motion status of the first target when the first target preempts to pass through the intersection point in a preset traveling manner. The second motion status limit value may represent, based on the historical motion status of the first target, a condition that at least needs to be met by a motion status of the first target when the first target yields to pass through the intersection point in the preset traveling manner.

In an embodiment, based on a historical traveling speed of a target obstacle, if the target obstacle preempts to pass through the intersection point in a preset traveling manner, when an intelligent driving device travels to the intersection point, a speed of the obstacle needs to be greater than or equal to a speed 1, and the speed 1 may be understood as the first motion status limit value. If the target obstacle yields to pass through the intersection point in the preset traveling manner, when the intelligent driving device travels to the intersection point, a speed of the obstacle needs to be less than or equal to a speed 2, and the speed 2 may be understood as the second motion status limit value.

In another embodiment, based on a historical position of the target obstacle, if the target obstacle preempts to pass through the intersection point in the preset traveling manner, when the intelligent driving device travels to the intersection point, a length of a path traveled by the obstacle needs to be greater than or equal to a length 1, and the length 1 may be understood as the first motion status limit value. If the target obstacle yields to pass through the intersection point in the preset traveling manner, when the intelligent driving device travels to the intersection point, a length of a path traveled by the obstacle needs to be less than or equal to a length 2. The length 2 may be understood as the second motion status limit value.

In this application, the first motion status limit value and the second motion status limit value that are determined based on the historical motion status of the target obstacle can be used as relative references for determining the probability distribution of the motion status in which the target obstacle preempts or yields to pass through the intersection point, so that more accurate probability distribution of the motion status can be obtained. By determining, based on this, an intent of preempting or yielding of the target obstacle, a more accurate determining result can be obtained.

With reference to the first aspect, in some implementations of the first aspect, the method may further include: determining, based on a first safety distance, a first critical position in the case in which the first target preempts to pass through the intersection point and a second critical position in the case in which the first target yields to pass through the intersection point; and the determining, based on the historical motion status of the first target, a first motion status limit value in a case in which the first target preempts to pass through the intersection point and a second motion status limit value in a case in which the first target yields to pass through the intersection point may include: determining the first motion status limit value based on the historical motion status of the first target and the first critical position, and determining the second motion status limit value based on the historical motion status of the first target and the second critical position.

In this application, the critical position in the case in which the target obstacle preempts to pass through and the critical position in the case in which the target obstacle yields to pass through that are determined based on the first safety distance are respectively used to determine the first motion status limit value and the second motion status limit value, so that when the probability distribution of the motion status in which the target obstacle yields or preempts to pass through the intersection point is determined, a constraint and a limitation on safe driving in an intersection scenario can be fully considered, thereby further improving driving safety of the intelligent driving device in the intersection scenario.

With reference to the first aspect, in some implementations of the first aspect, the determining, based on the historical motion status of the first target, a first motion status limit value in a case in which the first target preempts to pass through the intersection point and a second motion status limit value in a case in which the first target yields to pass through the intersection point may include: inputting the historical motion status of a first target into an optimization model, to obtain the first motion status limit value and the second motion status limit value, where the optimization model is obtained by training sample data, and the sample data may include a historical motion status of a sample target, a sample motion status in which the sample target yields to pass through a sample intersection point, a safety and/or comfort evaluation result of a sample vehicle in a case in which the sample target yields to pass through the sample intersection point, a sample motion status in which the sample target preempts to pass through the sample intersection point, and a safety and/or comfort evaluation result of the sample vehicle in a case in which the sample target preempts to pass through the sample intersection point.

In this application, the first motion status limit value and the second motion status limit value are obtained based on the optimization model, so that the probability distribution of the motion status that is determined based on the first motion status limit value and the second motion status limit value is closer to an actual motion status of the target obstacle in the intersection scenario, and therefore, determining on an intent of preempting or yielding of the target obstacle is more accurate.

With reference to the first aspect, in some implementations of the first aspect, the method may further include: when it is determined that the first target preempts to pass through the intersection point, controlling a prompt apparatus to prompt that there is a risk of collision with the first target. For example, a user may be prompted by using a voice, a text, an image, or the like. This is not limited in this application.

In this application, the risk of collision is prompted, so that in a manual driving scenario, the user can avoid using an aggressive driving manner, and unexpected collision can be avoided. In an autonomous driving scenario, this helps remind the user to intervene in intelligent driving in a timely manner, thereby improving driving safety.

With reference to the first aspect, in some implementations of the first aspect, the method may further include: when it is determined that the first target preempts to pass through the intersection point, controlling an intelligent driving device to decelerate.

In this application, when it is determined that the target obstacle preempts to pass through the intersection point, the intelligent driving device is controlled to decelerate, so that a risk of collision caused by the target obstacle preempting can be further reduced.

With reference to the first aspect, in some implementations of the first aspect, the method may further include: when it is determined that the first target yields to pass through the intersection point, controlling an intelligent driving device to accelerate.

In this application, when it is determined that the target obstacle yields to pass through the intersection point, the intelligent driving device is controlled to accelerate, so that the intelligent driving device can more quickly complete a process of intersection with the target obstacle, thereby further improving driving safety.

With reference to the first aspect, in some implementations of the first aspect, the first probability distribution and the second probability distribution may be respectively represented as follows:

$$\mathrm{p(X|GW)} = \begin{cases} 1, x \geq \mu_{GW} \\ \frac{1}{\sqrt{2\pi}\sigma_1} \exp\left(-\frac{(x-\mu_{GW})^2}{2\sigma_1^2}\right), x < \mu_{GW} \end{cases}, \mathrm{p(X|YD)} = \begin{cases} 1, x \leq \mu_{YD} \\ \frac{1}{\sqrt{2\pi}\sigma_2} \exp\left(-\frac{(x-\mu_{YD})^2}{2\sigma_2^2}\right), x > \mu_{YD} \end{cases}$$

, where p(X|GW) is the first probability distribution, p(X|YD) is the second probability distribution, $x$ is a motion status of the first target, $\mu_{GW}$ is the first motion status limit value, $\mu_{YD}$ is the second motion status limit value, $\sigma_1$ is a first variance, and $\sigma_2$ is a second variance.

According to a second aspect, an apparatus for determining an intent of a target is provided, where the apparatus may include: an obtaining unit, configured to obtain a historical motion status of a first target; and a processing unit, configured to determine, based on the historical motion status of the first target, a first probability distribution of a motion status in which the first target preempts to pass through an intersection point, and a second probability distribution of a motion status in which the first target yields to pass through the intersection point; and determine, based on a current motion status of the first target, the first probability distribution, and the second probability distribution, whether the first target preempts or yields to pass through the intersection point.

With reference to the second aspect, in some implementations of the second aspect, the processing unit may be configured to: determine, based on the historical motion status of the first target, a first motion status limit value in a case in which the first target preempts to pass through the intersection point, and a second motion status limit value in a case in which the first target yields to pass through the intersection point; and determine the first probability distribution based on the first motion status limit value, and determine the second probability distribution based on the second motion status limit value.

With reference to the second aspect, in some implementations of the second aspect, the processing unit may be further configured to: determine, based on a first safety distance, a first critical position in the case in which the first target preempts to pass through the intersection point and a second critical position in the case in which the first target yields to pass through the intersection point. The processing unit may be configured to: determine the first motion status limit value based on the historical motion status of the first target and the first critical position, and determine the second motion status limit value based on the historical motion status of the first target and the second critical position.

With reference to the second aspect, in some implementations of the second aspect, the processing unit may be configured to: input the historical motion status of the first target into an optimization model, to obtain the first motion status limit value and the second motion status limit value, where the optimization model is obtained by training sample data, and the sample data includes a historical motion status of a sample target, a sample motion status in which the sample target yields to pass through a sample intersection point, a safety and/or comfort evaluation result of a sample vehicle in a case in which the sample target yields to pass through the sample intersection point, a sample motion status in which the sample target preempts to pass through the sample intersection point, and a safety and/or comfort evaluation result of the sample vehicle in a case in which the sample target preempts to pass through the sample intersection point.

With reference to the second aspect, in some implementations of the second aspect, the processing unit may be further configured to: when it is determined that the first target preempts to pass through the intersection point, prompt that there is a risk of collision with the first target.

With reference to the second aspect, in some implementations of the second aspect, the processing unit may be further configured to: when it is determined that the first target preempts to pass through the intersection point, plan a first intelligent driving device to travel at a first speed, where the first speed is less than a current speed of the first intelligent driving device.

With reference to the second aspect, in some implementations of the second aspect, the processing unit is further configured to: when it is determined that the first target yields to pass through the intersection point, plan a first intelligent driving device to travel at a second speed, where the second speed is greater than a current speed of the first intelligent driving device.

With reference to the second aspect, in some implementations of the second aspect, the first probability distribution and the second probability distribution may be respectively represented as follows:

$$\mathrm{p(X|GW)} = \begin{cases} 1, x \geq \mu_{GW} \\ \frac{1}{\sqrt{2\pi}\sigma_1} \exp\left(-\frac{(x-\mu_{GW})^2}{2\sigma_1^2}\right), x < \mu_{GW} \end{cases}, \mathrm{p(X|YD)} =$$

$$\begin{cases} 1, x \leq \mu_{YD} \\ \frac{1}{\sqrt{2\pi}\sigma_2} \exp\left(-\frac{(x-\mu_{YD})^2}{2\sigma_2^2}\right), x < \mu_{YD} \end{cases}, \text{ where p(X|GW) is the first probability distribution of the motion status in}$$

which the first target preempts to pass through the intersection point, p(X|YD) is the second probability distribution of the motion status in which the first target yields to pass through the intersection point, $x$ is a motion status of the first target, $\mu_{GW}$ is the first motion status limit value, $\mu_{YD}$ is the second motion status limit value, $\sigma_1$ is a first variance, and $\sigma_2$ is a second variance.

According to a third aspect, an apparatus for determining an intent of a target is provided. The apparatus includes: a memory, configured to store a computer program; and a processor, configured to execute the computer program stored in the memory, to enable the apparatus to perform the method according to the first aspect and any one of the possible implementations of the first aspect.

According to a fourth aspect, a system for determining an intent of a target is provided. The system includes one or more sensors and a computing platform, and the computing platform includes the apparatus in the second aspect, the third aspect, and any one of the possible implementations of the second aspect or the third aspect.

According to a fifth aspect, a computer program product is provided. The computer program product includes computer program code, and when the computer program code is run on a computer, the computer is enabled to perform the method according to the first aspect and any one of the possible implementations of the first aspect.

According to a sixth aspect, a computer-readable storage medium is provided. The computer-readable medium stores a computer program, and when the computer program is run on a computer, the computer is enabled to perform the method according to the first aspect and any one of the possible implementations of the first aspect.

According to a seventh aspect, a chip is provided. The chip includes a circuit, configured to perform the method according to the first aspect and any one of the possible implementations of the first aspect.

According to an eighth aspect, an intelligent driving device is provided. The intelligent driving device includes the apparatus in the second aspect or the third aspect and any one of the possible implementations of the second aspect or the third aspect, or includes the system in the fourth aspect and any one of the possible implementations of the fourth aspect.

**BRIEF DESCRIPTION OF DRAWINGS**

FIG. 1 is a functional block diagram of an intelligent driving device according to an embodiment of this application;
FIG. 2 is a diagram of a system architecture according to an embodiment of this application;
FIG. 3 is a diagram of an intersection scenario according to an embodiment of this application;
FIG. 4 is a diagram of a method for determining an intent of a target according to an embodiment of this application;
FIG. 5 is a diagram of a probability distribution density of a motion status according to an embodiment of this application;
FIG. 6 is a diagram of an intersection scenario according to an embodiment of this application;
FIG. 7 is a schematic flowchart of a method for determining an intent of a target according to an embodiment of this application;

FIG. 8 is a block diagram of an apparatus for determining an intent of a target according to an embodiment of this application; and

FIG. 9 is a block diagram of another apparatus for determining an intent of a target according to an embodiment of this application.

## DESCRIPTION OF EMBODIMENTS

The following describes technical solutions of embodiments of this application with reference to accompanying drawings.

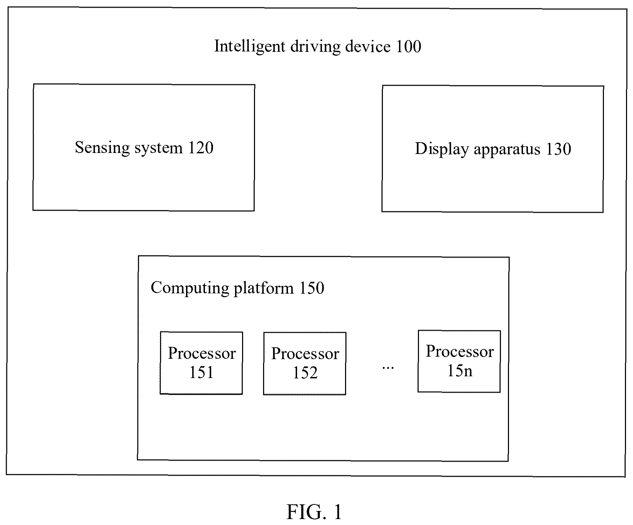

FIG. 1 is a functional block diagram of an intelligent driving device 100 according to an embodiment of this application. The intelligent driving device 100 may include a sensing system 120 and a computing platform 150. The sensing system 120 may include one or more sensors that sense ambient environment information of the intelligent driving device 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus. In some possible implementations, the intelligent driving device 100 may include a display apparatus 130. For example, the intelligent driving device is a vehicle, and the display apparatus may be a digital instrument display, a central control screen, a head-up display system, or the like.

Some or all functions of the intelligent driving device 100 may be controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

As described above, in a process of controlling interaction between a vehicle and an obstacle in a current autonomous driving system, there is an inevitable deviation in perception of a motion status of a moving obstacle and prediction of a future behavior of the obstacle. In addition, a planning and decision-making process requires time, causing a delay. Further, a delay and a lag effect exist in a process in which an executor is controlled to act to adjust the vehicle from a current motion status to a planned motion status. As a result, a motion trend of a moving obstacle needs to be identified in advance, for making a correct decision and planning in advance. In addition, due to a performance limitation of the executor, it may be difficult for the vehicle to implement the planned motion state due to delayed response to the moving obstacle, resulting in a risk of unexpected collision. Embodiments of this application provide an intelligent driving method, so that a probability distribution of a motion status like a speed and an acceleration of an obstacle in a case in which the obstacle preempts or yields can be separately determined based on a historical motion status of the obstacle, to determine an intent of preempting or yielding of the obstacle in advance with reference to a current motion status of the obstacle, so that a correct decision and planning can be made in advance, thereby improving safety of autonomous driving.

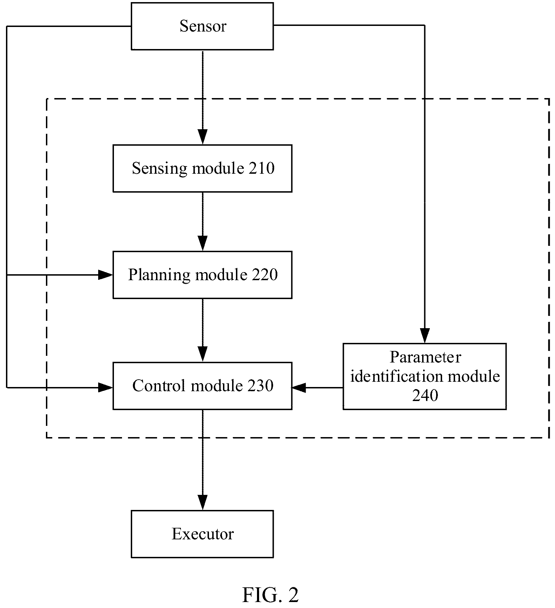

For example, FIG. 2 is a diagram of a system architecture according to an embodiment of this application. A system 200 may include a sensing module 210, a planning module 220, and a control module 230. The sensing module 210 may be configured to process data collected by one or more sensors, to learn ambient environment information of a vehicle. For example, the sensing module 210 may process the environment information collected by the sensing system shown in FIG. 1. For another example, by processing the environment information, a world model including a road, an obstacle, and the like may be established. The planning module 220 may be configured to perform planning and behavior decision-making based on the environment information. For example, the planning module 220 may be the computing platform 150 shown in FIG. 1, or may be one or more processors in the computing platform 150. For another example, a safe movement path for avoiding collision with an obstacle and a corresponding control value may be planned. The control module 230 may control, based on the control value, an executor like a power system, a steering system, and/or a braking system of an intelligent driving device to act. For example, the control module 230 may be the computing platform 150 shown in FIG. 1, or may be one or more processors in the computing platform 150. For another example, when it is determined that a surrounding vehicle has an intent of preempting, a vehicle may be controlled to decelerate to yield to the surrounding vehicle, to avoid collision with the surrounding vehicle.

The foregoing modules are merely examples. In actual application, the foregoing modules may be added or deleted based on an actual requirement. For example, in the system architecture shown in FIG. 2, the sensing module and the planning module may be combined into one module. For another example, the system may include a parameter identification module 240, configured to identify a parameter of each sensor, and the control module 230 may control, with reference to the parameter, the executor to act.

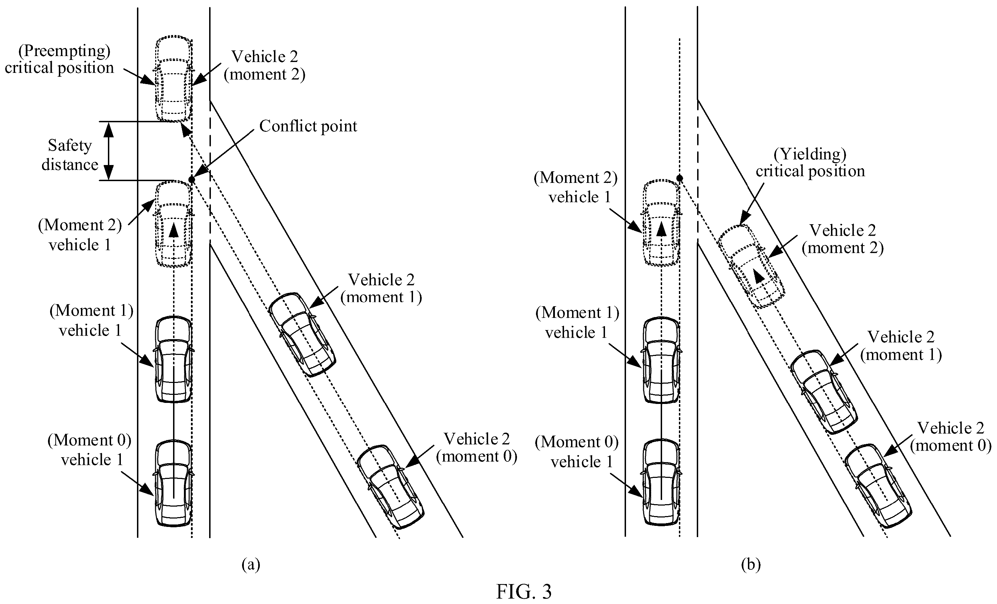

For example, FIG. 3 is a diagram of an intersection scenario according to an embodiment of this application. As shown in FIG. 3, a vehicle 1 and a vehicle 2 are located on different lanes, and there is an intersection point between the two lanes. (a) and (b) in FIG. 3 are in a same road environment. A moment 1 may be understood as a current moment, a moment 0 may be understood as a historical moment, and a moment 2 may be understood as a future moment.

An example in which the vehicle 1 is an ego vehicle and the vehicle 2 is a surrounding obstacle is used for brief description. In the scenario, the moment 2 may be understood as a moment at which the vehicle 1 travels to the intersection point. For example, a speed and a time point (for example, the moment 2 shown in FIG. 3) at which the vehicle passes through the intersection point may be estimated based on a pose, a speed, and a planned path of the vehicle 1 at the moment 0. For another example, the moment 2 may be predicted based on a motion status of the vehicle 1 at another moment. For still another example, it is assumed that the vehicle 1 and the vehicle 2 travel in predicted paths. When the vehicle 1 is located at the intersection point, if the vehicle 2 collides with the vehicle 1, a collision point between the vehicle 2 and the vehicle 1 is located at a conflict point shown in FIG. 3. For yet another example, a traveling path of the vehicle 1 or the vehicle 2 may be predicted based on a traveling direction of the vehicle 1 or the vehicle 2 at the moment 0 with reference to a lane line extension direction.

In an embodiment, the vehicle 2 has a radical traveling style and intends to preempt to pass through an intersection area of the two lanes, as shown in (a) in FIG. 3.

In another embodiment, the vehicle 2 has a conservative traveling style and intends to yield to pass through an intersection area of the two lanes, as shown in (b) in FIG. 3.

In still another embodiment, to avoid a risk of collision with the vehicle 2, a safety distance needs to be kept between the vehicle 1 and the vehicle 2, for example, 1.5 meters, 2 meters, or another value. For example, as shown in (a) in FIG. 3, a critical position in a case in which the vehicle 2 preempts may be determined based on the safety distance. In other words, in the case of preempting, the vehicle 2 needs to have passed or be at the preempting critical position at the moment 2. For another example, as shown in (b) in FIG. 3, a critical position in a case in which the vehicle 2 yields may be determined based on the safety distance. In other words, in a case of yielding, the vehicle 2 may be at or have not travelled to the yielding critical position at the moment 2.

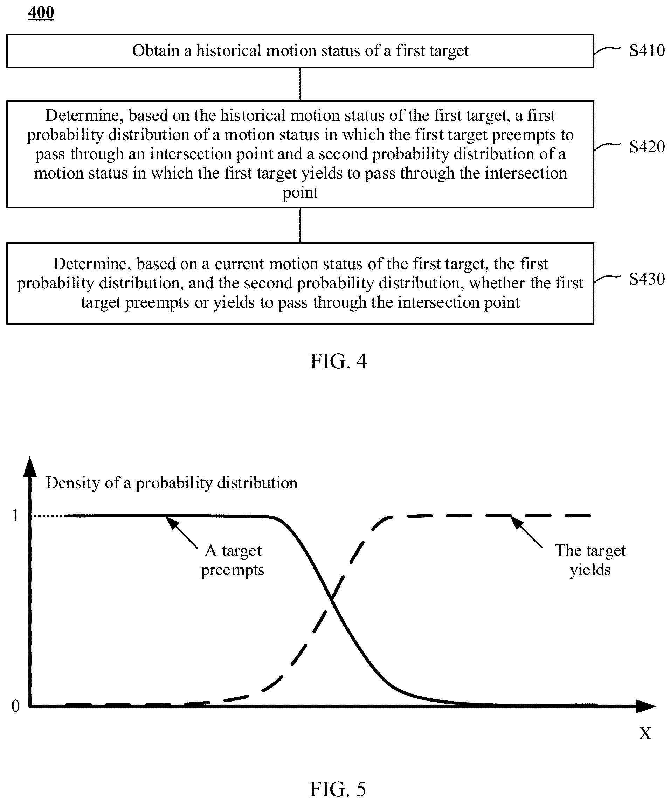

For example, FIG. 4 is a diagram of a method for determining an intent of a target according to an embodiment of this application. The method 400 may include the following steps.

S410: Obtain a historical motion status of a first target.

For example, the first target may be any surrounding obstacle. For example, the first target may be a surrounding vehicle, a rider, a pedestrian, or the like.

In an embodiment, the first target may be an obstacle in a preset surrounding range, for example, an obstacle in a range of 30 meters or 40 meters around a vehicle, or for another example, an obstacle in a range of 25 meters or 30 meters around an intersection point.

In another embodiment, the scenario shown in FIG. 3 is used as an example. It is assumed that the vehicle 1 is an ego vehicle, and the vehicle 2 may be understood as the first target. It is assumed that the moment 1 is a current moment, and the historical motion status of the first target may be a motion status of the vehicle 2 at any moment before the moment 1, for example, a speed and/or an acceleration of the vehicle 2 at the moment 0.

S420: Determine, based on the historical motion status of the first target, a first probability distribution of a motion status in which the first target preempts to pass through the intersection point and a second probability distribution of a motion status in which the first target yields to pass through the intersection point.

In an embodiment, as shown in FIG. 3, the intersection point may be a junction point of the two lanes.

In some possible implementations, a first motion status limit value in a case in which the first target preempts to pass through the intersection point and a second motion status limit value in a case in which the first target yield to pass through the intersection point may be estimated based on the historical motion status of the first target. The scenario shown in FIG. 3 is used as an example. Based on a motion status like a speed and an acceleration of the vehicle 2 at the moment 0, a preempting characteristic speed and/or a preempting characteristic acceleration that are/is of the vehicle 2 in a case in which the vehicle 2 preempts to pass through the intersection point may be predicted, and a yielding characteristic speed and/or a yielding characteristic acceleration that are/is of the vehicle 2 in a case in which the vehicle 2 yields to pass through the intersection point may be predicted.

In the scenario shown in FIG. 3, an example in which the vehicle 1 is an ego vehicle and the vehicle 2 is the first target is used for description. It is assumed that a speed of the vehicle 2 at the moment 0 is $V0_{obj}$, and a time between the moment 0 and the moment 2 is denoted as $t_{ego}$.

In an embodiment, when the vehicle 2 preempts to pass through the intersection point, a speed of the vehicle 2 at the moment 2 is greater than or equal to a characteristic speed $V_{GW}$, an acceleration of the vehicle 2 needs to be greater than or equal to a characteristic acceleration $acc_{GW}$, and a traveling distance of the vehicle 2 between the moment 0 and the moment 2 needs to be greater than or equal to a characteristic distance $S1_{obj}$. For example, the vehicle 2 travels in a straight line. When a straight-line distance between a position of the vehicle 2 at the moment 2 and a position of the vehicle at the moment 0 is less than the characteristic distance $S1_{obj}$, the vehicle 2 cannot preempt to pass through the intersection point. For another example, it may be determined, based on prediction of a traveling path of the vehicle 2, whether a traveling distance of the vehicle 2 between the moment 0 and the moment 2 is greater than or equal to the distance $S1_{obj}$.

In another embodiment, when the vehicle 2 yields to pass through the intersection point, a speed of the vehicle 2 at the moment 2 is less than or equal to a characteristic speed $V_{YD}$, an acceleration of the vehicle 2 needs to be less than or equal to a characteristic acceleration $acc_{YD}$, and a traveling distance between the moment 0 and the moment 2 needs to be less than or equal to a characteristic distance $S2_{obj}$.

The subscript GW may represent that an obstacle preempts, the subscript YD may represent that the obstacle yields, the subscript obj represents the obstacle (namely, the vehicle 2), and the subscript ego represents the ego vehicle (namely, the vehicle 1).

For example, the junction point of the lanes, and a yielding critical position and a preempting critical position of the vehicle 2 may be determined based on obtained environment information, and $S1_{obj}$ and $S2_{obj}$ may be determined with reference to the position of the vehicle 2 at the moment 0. For another example, a time required for the vehicle 1 to travel to the intersection point, namely, a time $t_{ego}$ between the moment 0 and the moment 2, may be determined based on planning of a traveling status of the vehicle 1. For another example, it is assumed that the vehicle 1 travels at a uniform speed in a planned path. A speed of the vehicle 1 at the moment 0 is denoted as $V0_{ego}$, and a traveling distance of the vehicle 1 between the moment 0 and the moment 2 is denoted as $S1_{ego}$. Based on an assumption that the vehicle 1 travels at the uniform speed, $t_{ego}$ may be represented as $t_{ego} = S1_{ego}/V0_{ego}$. For another example, a time between the moment 0 and the moment 2 may be determined based on planning of the motion status of the vehicle 1.

In another embodiment, it is assumed that the vehicle 2 moves in a uniform acceleration motion manner, a relationship between the characteristic distance $S1_{obj}$ and the characteristic acceleration $acc_{GW}$ in a case of preempting may be represented as

$$S1_{obj} = V0_{obj} \times t_{ego} + 0.5 \times acc_{GW} \times t_{ego}^2$$

, and a relationship between the characteristic distance $S2_{obj}$ and the characteristic acceleration $acc_{YD}$ in a case of yielding may be represented as

$$S2_{obj} = V0_{obj} \times t_{ego} + 0.5 \times acc_{YD} \times t_{ego}^2$$

. The preempting characteristic speed of the vehicle 2 may be represented as $V_{GW} = V0_{obj} + acc_{GW} \times t_{ego}$, and the yielding characteristic acceleration of the vehicle 2 may be represented as $V_{YD} = V0_{obj} + acc_{YD} \times t_{ego}$. For example, when an acceleration of the vehicle 2 is greater than the preempting characteristic acceleration, the vehicle 2 may pass through the preempting critical position shown in (a) in FIG. 3 before the moment 2. For another example, when the acceleration of the vehicle 2 is less than the yielding characteristic acceleration, the vehicle 1 may arrive at the yielding critical position shown in (b) in FIG. 3 at a moment later than the moment 2. For another example, it may be assumed that the vehicle 2 moves in another motion manner, or a motion manner of the vehicle 2 may be predicted based on a historical motion status of the vehicle 2, to determine one or more of the characteristic distance, the characteristic acceleration, and the characteristic speed. The preempting characteristic acceleration and the preempting characteristic speed may be understood as the first motion status limit value, and the yielding characteristic acceleration and the yielding characteristic speed may be understood as the second motion status limit value.

For example, a characteristic speed and a characteristic acceleration in the case in which the first target preempts to pass through the intersection point, and/or a characteristic speed and a characteristic acceleration in the case in which the first target yields to pass through the intersection point may be obtained based on a prediction model. For example, motion status information such as positions, speeds, and accelerations of the vehicle 1 and the vehicle 2 at the moment 0 and prediction results of the traveling paths of the vehicle 1 and the vehicle 2 are input into the prediction model, to obtain the characteristic speed and the characteristic acceleration in a case in which the vehicle 2 preempts or yields to pass through.

In an embodiment, the prediction model may be obtained through training based on a first training set. Training data in the first training set may include traveling statuses of an ego vehicle and a target obstacle in a scenario in which the target obstacle preempts, and a joint evaluation result of comfort and safety corresponding to the traveling scenario. The traveling scenario may include speeds and accelerations of the ego vehicle and the target obstacle at a first moment, speeds and accelerations of the ego vehicle and the target obstacle at a second moment in a case in which the target obstacle yields to pass through, and predicted traveling paths of the ego vehicle and the obstacle. Intersection between the ego vehicle and the target obstacle does not occur at the first moment, and the ego vehicle travels into an intersection point at the second moment.

In still another embodiment, the prediction model may be obtained through training based on a second training set. Training data in the second training set may include traveling statuses of an ego vehicle and a target obstacle in a scenario in which the target obstacle preempts, and a joint evaluation result of comfort and safety corresponding to the traveling scenario.

For example, a multi-modal optimization result may be obtained based on the prediction model. For example, a characteristic speed in a case in which the target obstacle preempts to pass through and a characteristic speed in a case in which the target obstacle yields to pass through may be obtained. For another example, a characteristic acceleration in the case in which the target obstacle preempts to pass through and a characteristic acceleration in the case in which the target obstacle yields to pass through may be obtained.

In some possible implementations, the first probability distribution may be determined based on the first motion status limit value, and the second probability distribution may be determined based on the second motion status limit value. For example, a probability distribution of a motion status may be determined based on a characteristic motion status by using a piecewise function.

For example, the first motion status limit value may be denoted as $\mu_{GW}$, and the second motion status limit value may be denoted as $\mu_{YD}$. The following provides descriptions with reference to the scenario shown in FIG. 3.

In an embodiment, a probability distribution of a motion status in which the vehicle 2 preempts to pass through may be represented as follows:

$$p(X|GW) = \begin{cases} 1, x \geq \mu_{GW} \\ \dfrac{1}{\sqrt{2\pi}\sigma_1} \exp\left(-\dfrac{(x - \mu_{GW})^2}{2\sigma_1^2}\right), x < \mu_{GW} \end{cases}$$

In another embodiment, a probability distribution of a motion status in which the vehicle 2 yields to pass through may be represented as follows:

$$p(X|YD) = \begin{cases} 1, x \leq \mu_{YD} \\ \dfrac{1}{\sqrt{2\pi}\sigma_2} \exp\left(-\dfrac{(x - \mu_{YD})^2}{2\sigma_2^2}\right), x > \mu_{YD} \end{cases}$$

Herein, $x$ represents a motion state, and may be a speed or an acceleration, $\sigma_1$ is a first variance, $\sigma_2$ is a second variance, and $\sigma_1$ and $\sigma_2$ may be the same, or may be different, and may be preset, or may be determined based on a driving style of the first target.

In the foregoing embodiment, in an interval $\mu_{GW}$ that $x$ is less than, a probability distribution of a speed or an acceleration of the vehicle 2 in the case in which the vehicle 2 preempts is estimated in a normal distribution manner; and in an interval $\mu_{YD}$ that $x$ is greater than, a probability distribution of a speed or an acceleration of the vehicle 2 in the case in which the vehicle 2 yields is estimated in a normal distribution manner.

Alternatively, the probability distribution of the motion status of the target obstacle in the case in which the target obstacle preempts or yields to pass through may be estimated in another manner. For example, in the scenario shown in FIG. 3, in the interval $\mu_{GW}$ that $x$ is less than, the probability distribution of the speed or the acceleration of the vehicle 2 in the case in which the vehicle 2 preempts may be estimated in a manner like Gaussian-like distribution or student's t-distribution (student's t-distribution).

For example, FIG. 5 is a diagram of a probability distribution of a motion status according to an embodiment of this application. FIG. 5 shows a density of conditional probability distributions of motion statuses such as a speed and an acceleration of a target obstacle in a scenario in which the target obstacle yields or preempts.

S430: Determine, based on a current motion status of the first target, the first probability distribution, and the second probability distribution, whether the first target preempts or yields to pass through the intersection point.

For example, a probability of preempting or yielding of the target obstacle in a specific motion state may be determined based on a Bayesian formula. The scenario shown in FIG. 3 is used as an example. When the vehicle 2 travels in a specific motion state, a probability that the vehicle 2 has an intent of yielding may be represented as p(YD|X) = p(X|YD) × p(YD)/[p(YD) × p(X|YD) + p(GW) × p(X|GW)], and a probability that the vehicle 2 has an intent of preempting may be represented as p(GW|X) = p(X|GW) × p(GW)/[p(YD) × p(X|YD) + p(GW) × p(X|GW)] . Herein, p(YD) and p(GW) may respectively represent a prior probability that the target object preempts and a prior probability that the target object yields. For another example, p(YD) may be 0.5, and p(GW) may be 0.5. For another example, a probability distribution of a motion status of the vehicle 2 in a case of yielding and a probability distribution of a motion status of the vehicle 2 in a case of preempting is obtained based on a motion status of the vehicle 2 at the moment 0, and a probability that the vehicle 2 has an intent of yielding and a probability that the vehicle 2 has an intent of preempting may be obtained with reference to a motion status of the vehicle 2 at the moment 1.

In some possible implementations, a driving radicality degree of the target obstacle may be determined based on analysis of the motion status of the target obstacle, to determine p(YD) and p(GW). For example, it may be determined, based on a motion status of the target obstacle in a preset time (for example, 5 seconds or 10 seconds), that the driving style of the target obstacle is radical, conventional, or conservative. For another example, when the driving style is radical, the target obstacle is more likely to preempt to pass through the intersection point, and p(YD) and p(GW) may be 0.2 and 0.8 respectively. For another example, when the driving style is conventional, p(YD) and p(GW) may be 0.5 and 0.5 respectively. For another example, when the driving style is conservative, the target obstacle is more likely to yield to pass through the intersection point, and p(YD) and p(GW) may be 0.4 and 0.6 respectively. For another example, the first variance and/or the second variance may be determined based on the driving style of the target obstacle.

The foregoing descriptions of the prior probability are merely examples for ease of description. In some possible implementations, p(YD) and p(GW) may alternatively be other values. This is not limited in embodiments of this application.

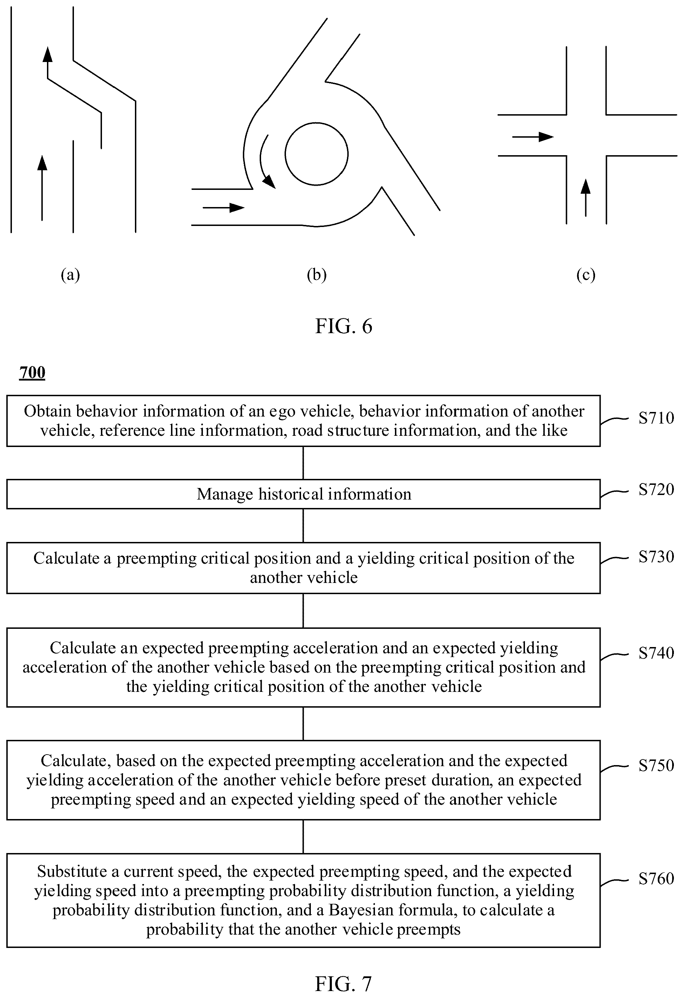

The intersection scenario shown in FIG. 3 is merely an example. For ease of description, embodiments of this application may further be applicable to another vehicle intersection scenario. For example, the vehicle 2 in FIG. 3 may be an ego vehicle, and the vehicle 1 may be a target obstacle, to determine a probability that the vehicle 1 has an intent of yielding and a probability that the vehicle 1 has an intent of preempting. For another example, the intersection scenario may include a plurality of obstacles, and intents of preempting or intents of yielding of the plurality of obstacles may be determined in advance. For another example, FIG. 6 is a diagram of an intersection scenario according to an embodiment of this application. In some possible implementations, the method 400 may further be applied to a scenario in which a plurality of lanes are combined into one lane (for example, as shown in (a) in FIG. 6), a roundabout intersection scenario (for example, as shown in (b) in FIG. 6), a crossroad intersection scenario (for example, as shown in (c) in FIG. 6), and the like. A scenario in which a vehicle and an obstacle intersect is not limited in embodiments of this application.

For example, FIG. 7 is a schematic flowchart of another method for determining an intent of a target according to an embodiment of this application. A method 700 may be understood as an extension of the method 400, and the method 700 may include the following steps.

S710: Obtain behavior information of an ego vehicle, behavior information of another vehicle, reference line information, road structure information, and the like.

For example, a speed and/or an acceleration of the ego vehicle, a speed and/or an acceleration of the another vehicle, positions of the ego vehicle and the another vehicle, a road structure, and the like may be determined based on data collected by an in-vehicle sensor.

For example, an intersection point may be determined based on the reference line information and the road structure information. The scenario shown in FIG. 3 is used as an example. A reference line of the ego vehicle may be determined based on a half-vehicle width and a planned path of the ego vehicle, and a reference line of the another vehicle may be determined based on a half-vehicle width and a prediction result of a traveling path of the another vehicle, to determine a conflict point between the two vehicles. For another example, it may be assumed that the vehicle travels in a current traveling direction. A reference line of the ego vehicle is determined based on a half-vehicle width of the ego vehicle and a road structure.

S720: Manage historical information.

For example, the behavior information of the ego vehicle, the behavior information of the another vehicle, the reference line information, and the road structure information that are obtained may be stored.

For example, when a distance between the another vehicle and the ego vehicle is greater than or equal to a preset threshold, and this state remains for preset duration, historical information related to the another vehicle may be deleted. For example, when the another vehicle is outside a sensing range of a sensor of the ego vehicle and more than 8 seconds has lapsed, historical information related to the another vehicle may be deleted. For another example, when a distance between the another vehicle and the ego vehicle is greater than or equal to a preset threshold (for example, 50 meters or 80 meters), and this case lasts for preset duration (for example, 5 seconds or 8 seconds), historical information related to the another vehicle may be deleted.

S730: Calculate a preempting critical position and a yielding critical position of the another vehicle.

For example, the preempting critical position and the yielding critical position of the another vehicle may be determined based on an intersection point and a safety distance.

S740: Calculate an expected preempting acceleration and an expected yielding acceleration of the another vehicle based on the preempting critical position and the yielding critical position of the another vehicle.

For example, a preempting characteristic acceleration and a yielding characteristic acceleration of the another vehicle may be separately determined based on the preempting critical position, the yielding critical position, and the historical behavior information of the another vehicle. For example, the expected acceleration may be calculated based on behavior information such as a speed, an acceleration, and a position of the another vehicle one second ago (or two seconds ago, or another historical moment).

S750: Calculate, based on the expected preempting acceleration and the expected yielding acceleration of the another vehicle, an expected preempting speed and an expected yielding speed of the another vehicle.

For example, the expected preempting speed and the expected yielding speed of the another vehicle may be calculated based on the preempting characteristic acceleration and the yielding characteristic acceleration of the another vehicle.

S760: Substitute a current speed, the expected preempting speed, and the expected yielding speed into a preempting probability distribution function, a yielding probability distribution function, and a Bayesian formula, to calculate a probability that the another vehicle preempts.

For example, the current speed, the preempting characteristic speed, and the yielding characteristic speed of the another vehicle are substituted into a speed probability distribution function in a case of preempting, a speed probability distribution function in a case of yielding, and the Bayesian formula, to calculate a probability that the another vehicle preempts and a probability that the another vehicle yields at the current speed.

For example, when it is determined that another vehicle preempts, a user may be prompted by using a speaker voice, or the user may be prompted by using a display apparatus like a central control screen to pay attention to a risk of collision with the vehicle.

In an embodiment, the scenario shown in (a) in FIG. 3 is used as an example. A planned speed of the vehicle 1 at the moment 1 is a speed 1. When it is determined that the vehicle 2 has an intent of preempting, the planned speed may be adjusted to a speed 2. The speed 2 is less than the speed 1. Therefore, the vehicle 1 can be decelerated in advance, to avoid unexpected collision with the vehicle 2 that has the intent of preempting to pass through.

In another embodiment, the scenario shown in (b) in FIG. 3 is used as an example. A planned speed of the vehicle 1 at the moment 1 is a speed 1. When it is determined that the vehicle 2 has an intent of yielding, the planned speed may be adjusted to a speed 3. The speed 3 is greater than the speed 1. Therefore, the vehicle 1 can accelerate to pass through the intersection point as soon as possible, to avoid unexpected collision with the vehicle 2 that has the intent of yielding to pass through.

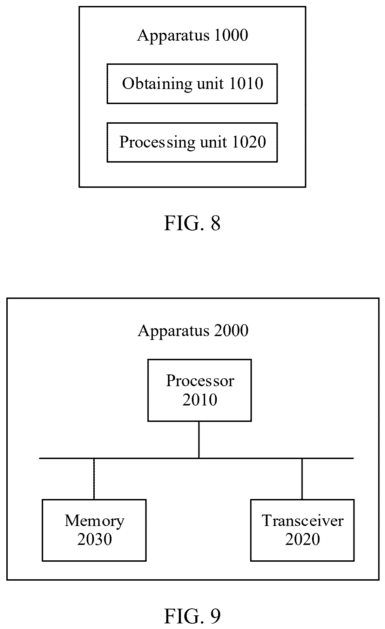

The foregoing describes in detail the methods provided in embodiments of this application with reference to FIG. 3 to FIG. 7. The following describes in detail an apparatus provided in embodiments of this application with reference to FIG. 8 and FIG. 9. Descriptions of apparatus embodiments correspond to the descriptions of the method embodiments. Therefore, for content that is not described in detail, refer to the foregoing method embodiments.

For example, FIG. 8 is a block diagram of an apparatus 1000 for determining an intent of a target (an apparatus 1000 for short) according to an embodiment of this application. The apparatus may include an obtaining unit 1010 and a processing unit 1020.

The apparatus 1000 may include units for performing any method in FIG. 4 to FIG. 7, and units in the apparatus 1000 may be configured to perform corresponding procedures in the method embodiments in FIG. 4 to FIG. 7.

When the apparatus 1000 is configured to perform the method 400 in FIG. 4, the obtaining unit 1010 may be configured to perform S410 in the method 400, and the processing unit 1020 may be configured to perform S420 and S430 in the method 400.

Specifically, the obtaining unit 1010 may be configured to obtain a historical motion status of a first target. The processing unit 1020 may be configured to: determine, based on the historical motion status of the first target, a first probability distribution of a motion status in which the first target preempts to pass through an intersection point, and a second probability distribution of a motion status in which the first target yields to pass through the intersection point; and determine, based on a current motion status of the first target, the first probability distribution, and the second probability distribution, whether the first target preempts or yields to pass through the intersection point.

Optionally, the processing unit 1020 may be configured to: determine, based on the historical motion status of the first target, a first motion status limit value in a case in which the first target preempts to pass through the intersection point, and a second motion status limit value in a case in which the first target yields to pass through the intersection point; and determine the first probability distribution based on the first motion status limit value, and determine the second probability distribution based on the second motion status limit value.

Optionally, the processing unit 1020 may be further configured to: determine, based on a first safety distance, a first critical position in the case in which the first target preempts to pass through the intersection point and a second critical position in the case in which the first target yields to pass through the intersection point. The processing unit 1020 may be configured to: determine the first motion status limit based on the historical motion status of the first target and the first critical position, and determine the second motion status limit based on the historical motion status of the first target and the second critical position.

Optionally, the processing unit 1020 may be configured to: input the historical motion status of the first target into an optimization model, to obtain the first motion status limit value and the second motion status limit value, where the optimization model is obtained by training sample data, and the sample data includes a historical motion status of a sample target, a sample motion status in which the sample target yields to pass through a sample intersection point, a safety and/or comfort evaluation result of a sample vehicle in a case in which the sample target yields to pass through the sample intersection point, a sample motion status in which the sample target preempts to pass through the sample intersection point, and a safety and/or comfort evaluation result of the sample vehicle in a case in which the sample target preempts to pass through the sample intersection point.

Optionally, the processing unit 1020 may be further configured to: when it is determined that the first target preempts to pass through the intersection point, control a prompt apparatus to prompt that there is a risk of collision with the first target.

Optionally, the processing unit 1020 may be further configured to: when it is determined that the first target preempts to pass through the intersection point, control an intelligent driving device to decelerate.

Optionally, the processing unit 1020 may be further configured to: when it is determined that the first target yields to pass through the intersection point, control an intelligent driving device to accelerate.

Optionally, the first probability distribution and the second probability distribution are respectively represented by the following formulas:

$$p(X|GW) = \begin{cases} 1, x \geq \mu_{GW} \\ \frac{1}{\sqrt{2\pi}\sigma_1} \exp\left(-\frac{(x-\mu_{GW})^2}{2\sigma_1^2}\right), x < \mu_{GW} \end{cases}, \quad p(X|YD) = \begin{cases} 1, x \leq \mu_{YD} \\ \frac{1}{\sqrt{2\pi}\sigma_2} \exp\left(-\frac{(x-\mu_{YD})^2}{2\sigma_2^2}\right), x > \mu_{YD} \end{cases}$$

, where p(X| GW) is the first probability distribution of the motion status in which the first target preempts to pass through the intersection point, p(X|YD) is the second probability distribution of the motion status in which the first target yields to pass through the intersection point, $x$ is a motion status of the first target, $\mu_{GW}$ is the first motion status limit value, $\mu_{YD}$ is the second motion status limit value, $\sigma_1$ is a first variance, and $\sigma_2$ is a second variance.

It should be understood that division of the units in the apparatus is merely logical function division. During actual implementation, all or some of the units may be integrated into one physical entity, or may be physically separated. All units of the apparatus may be implemented in a form of software invoked by a processor, or all units may be implemented in a form of a hardware circuit, or some units may be implemented in a form of software invoked by a processor, and a remaining part may be implemented in a form of a hardware circuit. In addition, all or some of the units of the apparatus may be integrated, or may be implemented independently.

In a specific implementation process, the obtaining unit 1010 may be implemented by at least one transceiver or a transceiver-related circuit, and the processing unit 1020 may be implemented by at least one processor or a processor-related circuit. In an example, the one or more processors may determine the first probability distribution based on the historical motion status of the first target. In an example, the one or more processors may determine the second probability distribution based on the historical motion status of the first target. In an example, the one or more processors may determine, based on the current motion status of the first target, the first probability distribution, and the second probability distribution, whether the first target preempts or yields to pass through the intersection point.

For example, in a specific implementation process, the apparatus 1000 may be the intelligent driving device 100 shown in FIG. 1, or the apparatus 1000 may be the computing platform 150 disposed on the intelligent driving device. Alternatively, the apparatus 1000 may be a processor or a chip of the computing platform 150.

In some possible implementations, the apparatus 1000 may alternatively be a cloud server, or may be a chip, a processing circuit, or the like disposed in the cloud server. For example, the cloud server may exchange information with the vehicle. The cloud server may determine a manner in which the first target passes through the intersection point, and may deliver an instruction to indicate a first intelligent driving device that the manner in which the first target passes through the intersection point is preempting or yielding. For another example, the cloud server may deliver an instruction to instruct the first intelligent driving device to decelerate when determining that the first target preempts to pass through the intersection point, to avoid a risk of unexpected collision between the first intelligent driving device and the first target. For another example, when determining that the first target preempts to pass through the intersection point, the cloud server may plan, for the first intelligent driving device, a passing manner of passing through the intersection point (for example, plan a motion status like a speed and an acceleration that are of the first intelligent driving device and a change rate of the motion status during traveling from a current position to the intersection point), and indicate the passing manner by delivering an instruction. In other words, in some possible implementations, the method 400 may alternatively be performed by the cloud server, or may be performed by a chip, a processor, or a processing circuit of the cloud server.

For example, FIG. 9 is a block diagram of another apparatus 2000 for determining an intent of a target (an apparatus 2000 for short) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, to receive/send some parameters through the interface circuit 2020. Optionally, the memory 2030 may be coupled to the processor 2010 through an interface, or may be integrated with the processor 2010.

In some possible implementations, the apparatus 2000 may be disposed in the intelligent driving device 100 shown in FIG. 1. In an embodiment, the apparatus 2000 may be the computing platform 150 shown in FIG. 1, or a processor or a chip of the computing platform 150.

In some possible implementations, the apparatus 2000 may alternatively be a cloud server, or may be a chip, a processing circuit, or the like disposed in the cloud server.

It should be noted that the interface circuit 2020 may include but is not limited to a transceiver apparatus like an input/output interface (input/output interface), to implement communication between the apparatus 2000 and another device or a network. For example, the information collected by the sensor and the motion status of the first target may be obtained through the interface circuit 2020.

An embodiment of this application further provides a system for determining an intent of a target. The system may include one or more sensors and a computing platform. The computing platform includes the foregoing apparatus 1000 or apparatus 2000.

An embodiment of this application further provides an intelligent driving device. The intelligent driving device includes the foregoing apparatus 1000 or apparatus 2000, or includes the foregoing system for determining an intent of a target. Optionally, the intelligent driving device is a vehicle.

An embodiment of this application further provides a server. The server includes the apparatus 1000 or the apparatus 2000.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on positions, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes: any medium that can store program code, for example, a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for determining an intent of a target, comprising:

   obtaining a historical motion status of a first target;
   determining, based on the historical motion status of the first target, a first probability distribution of a motion status in which the first target preempts to pass through an intersection point, and a second probability distribution of a motion status in which the first target yields to pass through the intersection point; and
   determining, based on a current motion status of the first target, the first probability distribution, and the second probability distribution, whether the first target preempts or yields to pass through the intersection point.

2. The method according to claim 1, wherein the determining, based on the historical motion status of the first target, a first probability distribution of a motion status in which the first target preempts to pass through an intersection point, and a second probability distribution of a motion status in which the first target yields to pass through the intersection point comprises:

   determining, based on the historical motion status of the first target, a first motion status limit value in a case in which the first target preempts to pass through the intersection point, and a second motion status limit value in a case in which the first target yields to pass through the intersection point; and
   determining the first probability distribution based on the first motion status limit value, and determining the second probability distribution based on the second motion status limit value.

3. The method according to claim 2, wherein the method further comprises:

   determining, based on a first safety distance, a first critical position in the case in which the first target preempts to pass through the intersection point and a second critical position in the case in which the first target yields to pass through the intersection point; and
   the determining, based on the historical motion status of the first target, a first motion status limit value in a case in which the first target preempts to pass through the intersection point, and a second motion status limit value in a case in which the first target yields to pass through the intersection point comprises:
   determining the first motion status limit value based on the historical motion status of the first target and the first critical position, and determining the second motion status limit value based on the historical motion status of the first target and the second critical position.

4. The method according to claim 2, wherein the determining, based on the historical motion status of the first target, a first motion status limit value in a case in which the first target preempts to pass through the intersection point, and a second motion status limit value in a case in which the first target yields to pass through the intersection point comprises:

inputting the historical motion status of the first target into an optimization model, to obtain the first motion status limit value and the second motion status limit value, wherein
the optimization model is obtained by training sample data, and the sample data comprises a historical motion status of a sample target, a sample motion status in which the sample target yields to pass through a sample intersection point, a safety and/or comfort evaluation result of a sample vehicle in a case in which the sample target yields to pass through the sample intersection point, a sample motion status in which the sample target preempts to pass through the sample intersection point, and a safety and/or comfort evaluation result of the sample vehicle in a case in which the sample target preempts to pass through the sample intersection point.

5. The method according to any one of claims 1 to 4, wherein the method further comprises:
when it is determined that the first target preempts to pass through the intersection point, controlling a prompt apparatus to prompt that there is a risk of collision with the first target.

6. The method according to any one of claims 1 to 5, wherein the method further comprises:

when it is determined that the first target preempts to pass through the intersection point, controlling an intelligent driving device to decelerate; or
when it is determined that the first target yields to pass through the intersection point, controlling an intelligent driving device to accelerate.

7. The method according to any one of claims 2 to 6, wherein the first probability distribution and the second probability distribution are respectively represented by:

$$p(X|GW) = \begin{cases} 1, x \geq \mu_{GW} \\ \dfrac{1}{\sqrt{2\pi}\sigma_1} \exp\left(-\dfrac{(x-\mu_{GW})^2}{2\sigma_1^2}\right), x < \mu_{GW} \end{cases},$$

$$p(X|YD) = \begin{cases} 1, x \leq \mu_{YD} \\ \dfrac{1}{\sqrt{2\pi}\sigma_2} \exp\left(-\dfrac{(x-\mu_{YD})^2}{2\sigma_2^2}\right), x > \mu_{YD} \end{cases},$$

wherein
$p(X|GW)$ is the first probability distribution, $p(X|YD)$ is the second probability distribution, $x$ is a motion status of the first target, $\mu_{GW}$ is the first motion status limit value, $\mu_{YD}$ is the second motion status limit value, $\sigma_1$ is a first variance, and $\sigma_2$ is a second variance.

8. An apparatus for determining an intent of a target, comprising:

an obtaining unit, configured to obtain a historical motion status of a first target; and
a processing unit, configured to: determine, based on the historical motion status of the first target, a first probability distribution of a motion status in which the first target preempts to pass through an intersection point and a second probability distribution of a motion status in which the first target yields to pass through the intersection point; and
determine, based on a current motion status of the first target, the first probability distribution and the second probability distribution, whether the first target preempts or yields to pass through the intersection point.

9. The apparatus according to claim 8, wherein the processing unit is configured to:

determine, based on the historical motion status of the first target, a first motion status limit value in a case in which the first target preempts to pass through the intersection point, and a second motion status limit value in a case in which the first target yields to pass through the intersection point; and
determine the first probability distribution based on the first motion status limit value, and determine the second probability distribution based on the second motion status limit value.

10. The apparatus according to claim 9, wherein the processing unit is further configured to:

determine, based on a first safety distance, a first critical position in the case in which the first target preempts to pass through the intersection point and a second critical position in the case in which the first target yields to pass through the intersection point; and
the processing unit is configured to:
determine the first motion status limit value based on the historical motion status of the first target and the first critical position, and determine the second motion status limit value based on the historical motion status of the first target and the second critical position.

11. The apparatus according to claim 9, wherein the processing unit is configured to:

input the historical motion status of the first target into an optimization model, to obtain the first motion status limit value and the second motion status limit value, wherein
the optimization model is obtained by training sample data, and the sample data comprises a historical motion status of a sample target, a sample motion status in which the sample target yields to pass through a sample intersection point, a safety and/or comfort evaluation result of a sample vehicle in a case in which the sample target yields to pass through the sample intersection point, a sample motion status in which the sample target preempts to pass through the sample intersection point, and a safety and/or comfort evaluation result of the sample vehicle in a case in which the sample target preempts to pass through the sample intersection point.

12. The apparatus according to any one of claims 8 to 11, wherein the processing unit is further configured to:
when it is determined that the first target preempts to pass through the intersection point, control a prompt apparatus to prompt that there is a risk of collision with the first target.

13. The apparatus according to any one of claims 8 to 12, wherein the processing unit is further configured to:

when it is determined that the first target preempts to pass through the intersection point, control an intelligent driving device to decelerate; or
when it is determined that the first target yields to pass through the intersection point, control an intelligent driving device to accelerate.

14. The apparatus according to any one of claims 9 to 13, wherein the first probability distribution and the second probability distribution are respectively represented by:

$$
p(X|GW) = \begin{cases} 1, x \geq \mu_{GW} \\ \dfrac{1}{\sqrt{2\pi}\sigma_1} \exp\left(-\dfrac{(x-\mu_{GW})^2}{2\sigma_1^2}\right), x < \mu_{GW} \end{cases},
$$

$$
p(X|YD) = \begin{cases} 1, x \leq \mu_{YD} \\ \dfrac{1}{\sqrt{2\pi}\sigma_2} \exp\left(-\dfrac{(x-\mu_{YD})^2}{2\sigma_2^2}\right), x > \mu_{YD} \end{cases},
$$

wherein
p(X|GW) is the first probability distribution, p(X|YD) is the second probability distribution, $x$ is a motion status of the first target, $\mu_{GW}$ is the first motion status limit value, $\mu_{YD}$ is the second motion status limit value, $\sigma_1$ is a first variance, and $\sigma_2$ is a second variance.

15. An apparatus for determining an intent of a target, comprising:

a memory, configured to store a computer program; and

a processor, configured to execute the computer program stored in the memory, to enable the apparatus to perform the method according to any one of claims 1 to 7.

16. A system for determining an intent of a target, wherein the system comprises one or more sensors and a computing platform, and the computing platform comprises the apparatus according to any one of claims 8 to 15.

17. An intelligent driving device, comprising the apparatus according to any one of claims 8 to 15, or comprising the system according to claim 16.

18. A computer-readable storage medium, wherein the computer-readable storage medium stores a computer program, and when the computer program is executed by a computer, the computer is enabled to perform the method according to any one of claims 1 to 7.

Intelligent driving device 100

Sensing system 120

Display apparatus 130

Computing platform 150

Processor 151

Processor 152

...

Processor 15n

FIG. 1

FIG. 2

FIG. 3

400

| Obtain a historical motion status of a first target | ⌐ S410 |

| Determine, based on the historical motion status of the first target, a first probability distribution of a motion status in which the first target preempts to pass through an intersection point and a second probability distribution of a motion status in which the first target yields to pass through the intersection point | ⌐ S420 |

| Determine, based on a current motion status of the first target, the first probability distribution, and the second probability distribution, whether the first target preempts or yields to pass through the intersection point | ⌐ S430 |

FIG. 4

Density of a probability distribution

1

A target preempts

The target yields

0

X

FIG. 5

(a)          (b)          (c)

FIG. 6

**700**

| |
|---|
| Obtain behavior information of an ego vehicle, behavior information of another vehicle, reference line information, road structure information, and the like |

S710

| |
|---|
| Manage historical information |

S720

| |
|---|
| Calculate a preempting critical position and a yielding critical position of the another vehicle |

S730

| |
|---|
| Calculate an expected preempting acceleration and an expected yielding acceleration of the another vehicle based on the preempting critical position and the yielding critical position of the another vehicle |

S740

| |
|---|
| Calculate, based on the expected preempting acceleration and the expected yielding acceleration of the another vehicle before preset duration, an expected preempting speed and an expected yielding speed of the another vehicle |

S750

| |
|---|
| Substitute a current speed, the expected preempting speed, and the expected yielding speed into a preempting probability distribution function, a yielding probability distribution function, and a Bayesian formula, to calculate a probability that the another vehicle preempts |

S760

FIG. 7

Apparatus 1000

Obtaining unit 1010

Processing unit 1020

## FIG. 8

Apparatus 2000

Processor
2010

Memory
2030

Transceiver
2020

## FIG. 9

## INTERNATIONAL SEARCH REPORT

| International application No. |
|---|
| **PCT/CN2024/080114** |

| A. | CLASSIFICATION OF SUBJECT MATTER |
|---|---|

B60W30/095(2012.01)i

According to International Patent Classification (IPC) or to both national classification and IPC

| B. | FIELDS SEARCHED |
|---|---|

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNTXT, ENTXT, VEN, DWPI, CJFD: 目标, 意图, 智能, 驾驶, 障碍物, 概率, 汇入点, 决策, 规划; target?, intention?, intelligence, steer+, driv+, obstruction, probability, converging point?, decision, mak+, plann+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113561974 A (TSINGHUA UNIVERSITY) 29 October 2021 (2021-10-29) description, paragraphs 35-50, and figures 1-8 | 1-18 |
| A | CN 110488816 A (HUAWEI TECHNOLOGIES CO., LTD.) 22 November 2019 (2019-11-22) entire document | 1-18 |
| A | CN 115056787 A (UISEE TECHNOLOGY (BEIJING) CO., LTD.) 16 September 2022 (2022-09-16) entire document | 1-18 |
| A | CN 115246415 A (HUAWEI TECHNOLOGIES CO., LTD.) 28 October 2022 (2022-10-28) entire document | 1-18 |
| A | DE 102020210964 A1 (ZAHNRADFABRIK FRIEDRICHSHAFEN) 03 March 2022 (2022-03-03) entire document | 1-18 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2024** | **09 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080114**

| Patent document cited in search report | | | Publication date (day/month/year) | Patent family member(s) | Publication date (day/month/year) |
|---|---|---|---|---|---|
| CN | 113561974 | A | 29 October 2021 | None | |
| CN | 110488816 | A | 22 November 2019 | None | |
| CN | 115056787 | A | 16 September 2022 | None | |
| CN | 115246415 | A | 28 October 2022 | None | |
| DE | 102020210964 | A1 | 03 March 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310479827